(19) Europäisches Patentamt
European Patent Office
Office européen des brevets

(11) **EP 2 731 811 B1**

(12) **FASCICULE DE BREVET EUROPEEN**

(45) Date de publication et mention
de la délivrance du brevet:
**16.11.2016 Bulletin 2016/46**

(21) Numéro de dépôt: **12733729.3**

(22) Date de dépôt: **11.07.2012**

(51) Int Cl.:
**B60C 11/12** *(2006.01)*      **B60C 9/20** *(2006.01)*

(86) Numéro de dépôt international:
**PCT/EP2012/063568**

(87) Numéro de publication internationale:
**WO 2013/007745 (17.01.2013 Gazette 2013/03)**

(54) **PNEU COMPRENANT UNE BANDE DE ROULEMENT PORVUE D'INCISIONS COMPRENANT DES PARTIES LARGES ET DES PARTIES ETROITES**

REIFEN MIT LAUFFLÄCHE BEINHALTEND EINSCHNITTE MIT BREITEN UND DÜNNEN ABSCHNITTEN

TIRE COMPRISING A TREAD WITH SIPES COMPRISING LARGE AND SLIM PORTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2011 FR 1156357**

(43) Date de publication de la demande:
**21.05.2014 Bulletin 2014/21**

(73) Titulaires:
- **Compagnie Générale des Etablissements Michelin**
  **63000 Clermont-Ferrand (FR)**
- **Michelin Recherche et Technique S.A.**
  **1763 Granges-Paccot (CH)**

(72) Inventeurs:
- **BERGER, Eric**
  **F-63040 Clermont-Ferrand Cedex 9 (FR)**
- **FLAMENT, Julien**
  **F-63040 Clermont-Ferrand Cedex 9 (FR)**
- **MUHLHOFF, Olivier**
  **F-63040 Clermont-Ferrand Cedex 9 (FR)**

(74) Mandataire: **Diernaz, Christian**
  **M. F. P. Michelin,**
  **23, place des Carmes Dechaux,**
  **DGD/PI-F35-Ladoux**
  **63040 Clermont-Ferrand Cedex 09 (FR)**

(56) Documents cités:
**FR-A1- 2 924 981      JP-A- 3 001 910
JP-A- 7 276 923       US-A- 5 603 366**

EP 2 731 811 B1

**Description**

*DOMAINE DE L'INVENTION*

La présente invention concerne les bandes de roulement pour pneumatiques, en particulier pour pneumatiques destinés à être utilisés sur sol enneigé. Elle concerne également des pneumatiques pour véhicules de tourisme équipés de telles bandes de roulement.

*ÉTAT DE LA TECHNIQUE*

Il est connu de pourvoir une bande de roulement d'un pneu avec un dessin de sculpture comportant une pluralité de découpures (« *eut ont* » en anglais) de différentes dimensions dans le but notamment d'évacuer l'eau qui - par temps de pluie, est présente entre la chaussée et la bande de roulement. Il est ainsi possible d'assurer une adhérence satisfaisante d'un point de vue sécurité du pneumatique sur ladite chaussée. Par « découpure », il faut entendre un espace creux d'une bande de roulement délimité par des parois de mélange caoutchouteux ou de tout autre matériau formant la bande de roulement, ces parois se faisant face et débouchant sur la surface de roulement en formant deux arêtes en vis-à-vis.

Selon la largeur de ces découpures, on distingue les rainures (largeur au moins égale à 2 mm) et les incisions de largeur inférieure à 2 mm ; ces dernières grâce à cette largeur faible offrent l'avantage de se refermer au moins partiellement au passage dans le contact avec la chaussée, c'est-à-dire qu'au moins en partie les parois en vis-à-vis délimitant ces incisions sont en contact l'une contre l'autre. Toutes les découpures forment des arêtes sur la surface de la bande de roulement, cette surface entrant en contact avec la chaussée (dite « surface de roulement ») ; ces arêtes sont d'une grande importance pour améliorer les performances de roulage notamment sur chaussée enneigée ou revêtue d'eau par temps de pluie.

Les pneus hivernaux en roulant sur une chaussée enneigée peuvent présenter l'inconvénient suivant : les entailles formant le dessin de sculpture se remplissent de neige et conservent cette neige d'un passage dans le contact au passage suivant. Si la neige remplit les entailles, ce n'est plus l'adhérence gomme-neige qui détermine le comportement du pneumatique, mais l'adhérence neige-neige. Bien évidemment, la neige aura tendance à remplir plus vite les entailles de petite largeur.

Pour faire face à cet inconvénient, il a été proposé de pourvoir chaque incision de zones élargies par rapport à la largeur de cette incision, afin d'augmenter la capacité de stockage de l'incision. Le document EP 0847878, cherche à améliorer la traction d'un pneumatique pour sol enneigé, et propose dans ce but une bande de roulement pour pneumatique comportant une découpure débouchant sur la surface de roulement et ayant une profondeur inférieure à l'épaisseur de la bande de roulement, cette découpure formant, sur la surface de roulement du pneumatique à l'état neuf, deux arêtes en vis-à-vis, ces arêtes délimitant une pluralité de portions étroites et au moins une portion large, ces portions larges et étroites étant disposées en alternance et s'étendant sur toute la profondeur de la découpure. Les portions larges ont une largeur progressivement décroissante en allant vers l'intérieur de la bande de roulement.

Le document EP 1190871 décrit une solution permettant d'assurer une non fermeture d'une découpure lorsque le pneumatique est soumis à une accélération ou à un freinage. Cette solution consiste à réduire localement la largeur de chaque incision en formant des sortes de protubérances. Le document décrit une bande de roulement comportant au moins une découpure débouchant sur la surface de roulement et ayant une profondeur inférieure à l'épaisseur de la bande de roulement, cette découpure formant, sur la surface de roulement du pneumatique, deux arêtes en vis-à-vis, ces arêtes délimitant une pluralité de portions étroites, et une pluralité de portions larges, les portions larges et étroites étant disposées en alternance, la portion étroite s'étendant sur toute la profondeur de la découpure, la portion large s'étendant dans la profondeur de la bande de roulement sur au moins 30 % de la profondeur de la découpure. Entre les protubérances, il est formé des portions larges tandis qu'à l'endroit des protubérances il est formé des portions étroites.

Les dessins de sculptures proposés par l'art antérieur cité comportent plusieurs inconvénients. En particulier, la structure du fond de la découpure comporte le risque de faire naître des fissures et de compromettre ainsi l'endurance du pneumatique.

Le document JP-7276923 décrit un pneumatique selon le préambule de la revendication 1 avec une bande de roulement comprenant des blocs pourvus d'incisions comprenant des parties étroites et des parties élargies disposées en alternance.

Définitions :

Un bloc est un élément en relief formé sur la bande de roulement qui est délimité par des creux ou rainures et comprenant des parois latérales et une face de contact destinée à venir en contact avec la chaussée.

Par direction radiale, on entend dans le présent document une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle ou longitudinale, on entend une direction qui est perpendiculaire à la fois à la direction axiale et à une direction radiale.

***BREF EXPOSÉ DE L'INVENTION***

L'invention propose une bande de roulement pour pneumatique destiné à être utilisé dans des conditions hivernales et offrant une bonne adhésion du pneumatique sur la neige tout en limitant les pertes énergétiques quelques soient les conditions de roulage.

Cet objectif est atteint par une bande de roulement pour pneumatique, cette bande ayant une épaisseur E correspondant à l'épaisseur de matière pouvant être usée en roulage avant de devoir changer le pneu ou à tout le moins le rénover. Cette bande comporte :

- une surface de roulement destinée à entrer en contact avec la chaussée au cours d'un roulage du pneu sur une chaussée, cette surface est formée par l'ensemble des faces de contact des éléments de sculpture ;

- au moins une incision d'orientation transversale ou sensiblement transversale de largeur variable débouchant sur la surface de roulement et ayant une profondeur P.

Préférentiellement cette profondeur P est au plus égale à l'épaisseur E de la bande de roulement.

Cette incision transversale ou sensiblement transversale a une largeur variable et forme, sur la surface de roulement de la bande de roulement à l'état neuf, deux arêtes en vis-à-vis, ces arêtes délimitant au moins une portion d'incision étroite, c'est-à-dire de largeur moyenne LE inférieure ou égale à 2 mm, et au moins une portion d'incision large, c'est-à-dire ayant une largeur moyenne LL supérieure à 2 mm. Les largeurs des parties large et étroite sont mesurées perpendiculairement aux parois délimitant l'incision.

Ces portions large et étroite d'incision sont disposées en alternance, chaque portion étroite s'étendant sur toute la profondeur P de l'incision, chaque portion large s'étendant sur toute la profondeur P de l'incision.

La bande de roulement selon l'invention est telle que chaque portion large d'incision a un volume majoritairement situé entre la moitié de la profondeur P de la découpure et la profondeur P : cela signifie que le volume de chaque partie large d'incision situé entre 50% de la profondeur P et la profondeur P est supérieur au volume de la même partie large située entre la surface de roulement à l'état neuf et 50% de la profondeur P de cette incision.

En outre, pour réduire les pertes liées à l'hystérèse des matériaux composant la bande de roulement et générées par les déformations de ces matériaux au passage dans le contact avec la route pendant le roulage, on prévoit que la somme des largeurs LE (somme LE) des parties étroites de toutes les incisions transversales des éléments de relief d'une même rangée circonférentielle satisfasse à la relation suivante :

$$0.90 \text{ x } E/R < (\text{somme LE})/Pr < 1.10\text{x } E/R,$$

relation dans laquelle :

- (somme LE) est égale à l'addition des largeurs moyennes LE des parties étroites de toutes les incisions séparant les éléments de relief d'une même rangée prises sur un cercle centré sur l'axe de rotation du pneu,

- R est le rayon moyen du cercle centré sur l'axe de rotation pris à l'état neuf sur la surface de roulement de la rangée considérée et Pr est le périmètre moyen de ce même cercle ;

- E l'épaisseur moyenne de la bande de roulement prise au niveau de la rangée considérée.

En respectant cette relation, on assure une fermeture des parties étroites des incisions au passage dans le contact, cette fermeture n'étant liée qu'à une modification de la courbure de la bande de roulement et non à une déformation des matériaux. On limite ainsi autant que faire se peut les déformations transversales et les déformations de compression dans la direction de l'épaisseur de la bande de roulement. De cette limitation des déformations dans le contact avec la route, il résulte une réduction sensible des pertes liées à l'hystérèse des matériaux et à leurs déformations.

Bien entendu, la bande de roulement selon l'invention peut en outre comporter une pluralité de découpures pouvant être soit des rainures et soit des incisions, ou une combinaison de rainures et d'incisions.

Selon un mode de réalisation préférentiel, chaque portion large d'incision comprend une première partie de largeur constante (cette partie ayant une largeur au moins égale à 2 mm) entre la surface de roulement à l'état neuf de la bande et une profondeur au moins égale à la moitié de la profondeur P de l'incision, cette première partie étant ensuite prolongée par une seconde partie de largeur supérieure à la largeur de la première partie. Préférentiellement, la profondeur de passage entre la première partie et la seconde partie est au moins égale à 50% de la profondeur P de l'incision et au plus égale à 75% de cette même profondeur.

Selon une variante de ce mode de réalisation, les parties étroites de l'incision peuvent être pourvues de parties élargies localement afin de réduire les contraintes dans la matière en fond d'incision, comme cela est connu.

Selon un autre mode de réalisation préférentiel, chaque partie large d'incision a une largeur qui augmente régulièrement en partant de la surface de roulement jusqu'à la profondeur P de l'incision.

Selon un autre mode de réalisation préférentiel, chaque partie large d'incision est de largeur constante ou quasiment constante mais sa longueur - mesurée dans une direction parallèle à la direction des arêtes formées par l'incision sur la surface de roulement, augmente avec la profondeur.

Il est possible de prévoir une transition abrupte entre chaque partie large et chaque partie étroite. Il est cependant préférable que la partie large comporte une région de raccordement destinée à la raccorder de façon progressive à la portion étroite.

De préférence, la largeur moyenne LL de chaque partie large d'incision supérieure à la largeur moyenne de chaque partie étroite de la même incision, est au moins égale à 1.5 mm et encore plus préférentiellement supérieure à 2 mm de façon à rester ouverte dans le contact avec la chaussée.

Les longueurs de chaque partie étroite et large mesurées dans la direction de la longueur de l'incision peuvent être adaptées selon le besoin : elles peuvent être égales ou bien encore les parties étroites être plus longues que les parties larges. On peut notamment déterminer ces longueurs de manière que la surface d'ouverture sur la surface de roulement de chaque partie étroite et large soit sensiblement identique. Par surface d'ouverture, on entend la surface de cavité sur la surface de roulement à l'état neuf. La longueur d'une incision correspond à la distance entre les points d'extrémité des arêtes de ladite incision sur la surface de roulement à l'état neuf.

De façon avantageuse, le volume le plus grand de chaque portion large - volume mesuré entre la moitié de la profondeur et le fond de l'incision - est au moins égal à 1.10 fois le volume de ladite portion large mesuré entre la surface de roulement et la moitié de la profondeur.

De façon encore plus avantageuse, le volume le plus grand est au moins égal à 1.20 fois le volume le plus petit de la même portion large.

Selon une variante de bande de roulement selon l'invention, chaque partie large d'incision a une largeur LL constante et une longueur croissante DL avec la profondeur, cette longueur DL étant mesurée dans la direction de l'incision sur la surface de roulement. La direction d'une incision sur la surface de roulement correspond à la direction d'une droite joignant les points d'extrémité de cette incision sur cette surface.

Selon une variante de l'invention, chaque partie large d'incision a une largeur augmentant régulièrement entre la surface de roulement à l'état neuf et le fond de l'incision.

Selon une autre variante de l'invention, chaque partie large d'incision a une largeur constante entre la surface de roulement à l'état neuf et une profondeur P1 supérieure à la moitié de la profondeur P de l'incision, cette partie de largeur constante étant prolongée jusqu'à la profondeur P par une partie de largeur supérieure à la largeur de la partie de largeur constante.

L'invention concerne bien entendu des pneus pourvus avec des bandes de roulement selon l'invention comme cela vient d'être décrit, et plus particulièrement des pneus pour véhicules de tourisme.

D'autres caractéristiques et avantages de l'invention ressortent de la description faite ci-après en référence aux dessins annexés qui montrent, à titre d'exemples non limitatifs, des formes de réalisation de l'objet de l'invention.

## *BRÈVE DESCRIPTION DES FIGURES*

L'invention sera mieux comprise grâce à la description des dessins selon lesquels :

la figure 1 montre une bande de roulement comprenant deux rangées d'éléments pourvues chacune avec des incisions selon l'invention ;

la figure 2 représente, schématiquement une incision selon une première variante de l'invention ;

la figure 3 représente, schématiquement une incision selon une deuxième variante de l'invention ;

la figure 4 représente, schématiquement une incision selon une troisième variante de l'invention ;

la figure 5 représente, schématiquement une incision selon une quatrième variante de l'invention ;

la figure 6 représente, schématiquement une incision selon une cinquième variante de l'invention ;

## DESCRIPTION DES FIGURES

Pour faciliter la lecture des figures, des mêmes signes de référence peuvent être employés pour la description de variantes de l'invention dès lors que ces signes de référence renvoient à des éléments d'une même nature qu'elle soit structurelle ou bien fonctionnelle.

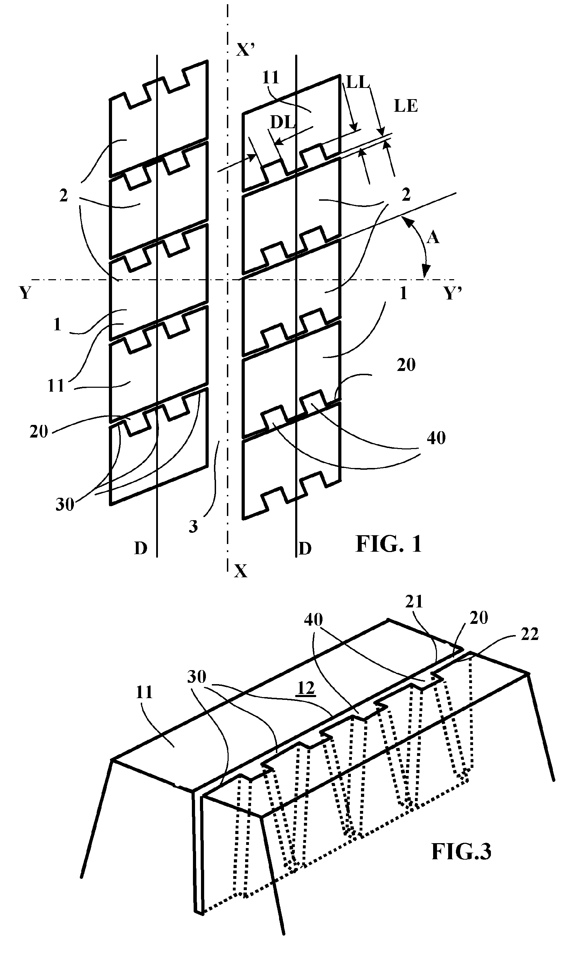

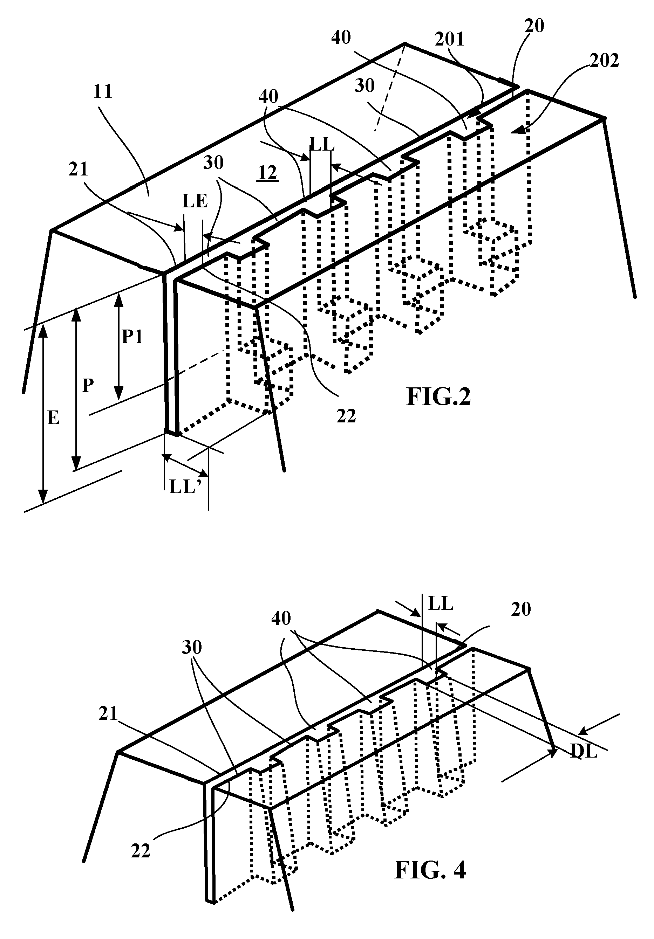

Avec la figure 1, on montre une réalisation de pneu comprenant deux rangées circonférentielles 1 d'éléments de relief 2, ces rangées 1 étant séparées entre elles par une rainure 3 circonférentielle. Ces rangées 1 forment des nervures circonférentielles pourvues avec une pluralité d'incisions 20 selon l'invention ; ces incisions 20 ont une orientation sensiblement transversale, c'est-à-dire qu'elles sont inclinées d'un angle moyen égal à 15° avec la direction de l'axe de rotation du pneu. Ces incisions 20 délimitent avec les rainures circonférentielles une pluralité d'éléments de relief 11. Chaque incision 20 comprend en alternance des parties étroites 30 de largeur LE et de parties larges 40 de largeur supérieure à la largeur LE. Chaque incision 20 est inclinée d'un angle moyen A égal à 15 degrés avec la direction transversale (indiquée par la direction YY' sur la figure 4).

Chaque incision (20) d'orientation sensiblement transversale s'ouvre sur la surface de roulement (12) et a une profondeur P au plus égale à l'épaisseur E de la bande de roulement mesurée au niveau de la rangée considérée. Chaque incision (20) forme, sur la surface de roulement du pneumatique à l'état neuf, deux arêtes (21, 22) en vis-à-vis, ces arêtes (21, 22) délimitant au moins une portion étroite (30) de l'incision, c'est-à-dire de largeur moyenne LE inférieure ou égale à 2 mm, et au moins une portion large (40) de l'incision, c'est-à-dire de largeur moyenne LL supérieure à 2 mm. Ces portions large et étroite sont disposées en alternance, une portion étroite étant suivie d'une portion large. Chaque portion étroite (30) s'étend sur toute la profondeur P de l'incision (20), et a un volume uniformément réparti sur toute la profondeur P de l'incision. Chaque portion large (40) s'étend sur toute la profondeur P de l'incision (20) et a un volume qui n'est pas uniformément réparti et qui est en majorité compris entre la moitié de la profondeur P de la découpure et la profondeur P

Pour assurer une limitation de la déformation des éléments de relief 11 lors du passage dans le contact en roulage sur une route, on détermine le nombre et la largeur des incisions 20 de chaque rangée 1 en fonction du périmètre Pr d'un cercle centré sur l'axe de rotation du pneu et passant de façon tangente à la surface externe de chaque nervure (la trace de ce cercle est indiqué par un segment de droite D). Ce périmètre est mesuré préférentiellement sur la partie médiane de chaque rangée 1 et sur la surface de roulement du pneu à l'état neuf (c'est-à-dire avant tout roulage et usure).

Dans le cas présent - correspondant à un pneu de dimension 205/55R16 - la somme des largeurs LE des parties étroites des découpures d'une même nervure satisfait la relation suivante :

$$0.90 \text{ x E/R} < (\text{somme LE})/\text{Pr} < 1.10\text{x E/R,}$$

relation dans laquelle :

- R est le rayon moyen du cercle centré sur l'axe de rotation pris à l'état neuf sur la surface de roulement de la rangée considérée - dans le cas présent R =316 mm ;

- Pr est égal au périmètre de ce même cercle, dans le cas présent Pr =1985 mm ;

- E est l'épaisseur moyenne de la bande de roulement prise au niveau de la rangée considérée, dans le cas présent E = 10 mm ;

- (somme LE) est égale à la l'addition des largeurs moyennes LE des parties étroites de toutes les incisions séparant les éléments de relief d'une même rangée prises sur un cercle centré sur l'axe de rotation du pneu - dans le cas présent, LE = 0.6 mm et (somme LE) = 60 mm.

Chaque rangée comprend cent incisions disposées avec un pas égal à 8 mm.

La figure 2 montre une variante d'incision selon l'invention. La figure 2 ne montre qu'une partie de la surface de roulement, à savoir la partie qui se trouve sur l'élément de relief 11. Cet élément de relief 11 comprend une découpure ou incision 20 selon l'invention, cette incision débouchant sur la surface de roulement 12 et ayant une profondeur P légèrement inférieure à l'épaisseur E de la bande de roulement. Par « découpure », il faut entendre un espace creux d'une bande de roulement, délimité par des parois de mélange caoutchouteux ou de tout autre matériau formant la bande de roulement et débouchant sur la surface de roulement en formant deux arêtes en vis-à-vis. Dans le cas présent, l'incision 20 est délimitée par une première paroi 201 et une seconde paroi 202 ; la première paroi 201 est plane tandis que la seconde paroi 202 est formée d'une pluralité de parties planes 221, 222, certaines de ces parties planes 221 étant parallèles à la première paroi 201 de l'incision 20 et les autres parties 222 étant perpendiculaires à la première paroi 201.

L'incision 20 montrée forme, sur la surface de roulement 12 du pneumatique à l'état neuf, deux arêtes 21 et 22 en vis-à-vis. L'arête 21 a un tracé rectiligne - définissant la longueur de l'incision 20 - tandis que l'autre arête 22 présente un tracé formé de tronçons d'arête rectiligne, ces tronçons étant pour certains parallèles à l'arête 21 et pour les autres perpendiculaires à cette même arête 21. La distance moyenne la plus petite séparant les tronçons de l'arête 22 parallèles à l'arête 21 est notée LE.

Ces arêtes 21, 22 délimitent dans le cas montré cinq parties étroites 30 de l'incision 20, c'est-à-dire de largeur moyenne LE inférieure ou égale à 2 mm, et quatre parties larges (40) de l'incision 20, c'est-à-dire de largeur moyenne LL supérieure à 2 mm, ces portions larges et étroites étant disposées en alternance, chaque portion étroite 30 et chaque portion large 40 s'étendant sur toute la profondeur P de la découpure 20.

Par ailleurs, on observe qu'entre la surface de roulement à l'état neuf et une profondeur P1 inférieure à P, les portions étroites 30 et larges 40 ne changent pas de géométrie tandis qu'à partir de cette profondeur P1 et jusqu'à la profondeur P, les parties larges 40 ont une largeur LL' qui est supérieure à la largeur LL des parties larges entre la surface de roulement à l'état neuf et la profondeur P1. La largeur LL' est ici environ 30% supérieure à la largeur LL.

Dans le cas présent, la profondeur P1 représente sensiblement les 2/3 de la profondeur P.

De cette manière, chaque partie large 40 présente un volume en majorité compris entre la moitié de la profondeur P de la découpure et la profondeur P. C'est-à-dire que plus de 50% du volume disponible de chaque partie large est localisé entre la profondeur P1 et la profondeur P de la découpure.

Exemple de valeurs pour un pneu de dimension 205/55R16 :
Épaisseur E = 10 mm
Profondeur découpure P = 8 mm
Profondeur P1 = 5 mm
Largeur partie étroite LE = 0.6 mm
Largeur partie large LL (entre surface de roulement et la profondeur P1) = 2 mm
Largeur partie large LL' (entre la profondeur P1 et la profondeur totale P) = 3 mm

Dans une deuxième variante de l'invention, montrée avec la figure 3, la géométrie des parties larges 40 des incisions 20 est modifiée. En effet, chaque partie large 40 conserve une même largeur LL sur toute la profondeur P de l'incision 20 mais chaque partie large présente une largeur mesurée parallèlement à l'arête rectiligne 21 (c'est-à-dire parallèle à la longueur de l'incision 20) qui varie en fonction de la profondeur et dans le cas présent est croissante de façon régulière avec la profondeur afin que le volume de chaque partie large soit en majorité situé entre la moitié de la profondeur P de l'incision 20 et la profondeur P. En jouant sur la géométrie des parties larges il est aisé d'avoir une plus ou moins grande part du volume de chaque partie large entre 50% de la profondeur P et ladite profondeur P. Pour limiter les concentrations de contraintes on peut pourvoir le fond de l'incision et sur toute sa longueur avec une partie additionnelle en forme de canal de section circulaire comme cela est connu dans l'art antérieur. Ce volume de la partie additionnelle n'est pas pris en compte pour l'évaluation du volume de la partie large de l'incision.

Dans une troisième variante de l'invention, montrée avec la figure 4, la géométrie de chaque partie large 40 d'une découpure 20 est modifiée par rapport à celle de chaque partie large des incisions montrées avec le support des figures 2 et 3. Ici, chaque partie large 40 conserve une même longueur DL mesuré parallèlement à l'arête rectiligne 21 et présente une largeur LL mesurée perpendiculairement à l'arête rectiligne 21. Cette largeur LL varie de façon régulièrement croissante avec la profondeur afin que le volume de chaque partie large soit en majorité situé entre la moitié de la profondeur P de la découpure 20 et la profondeur P.

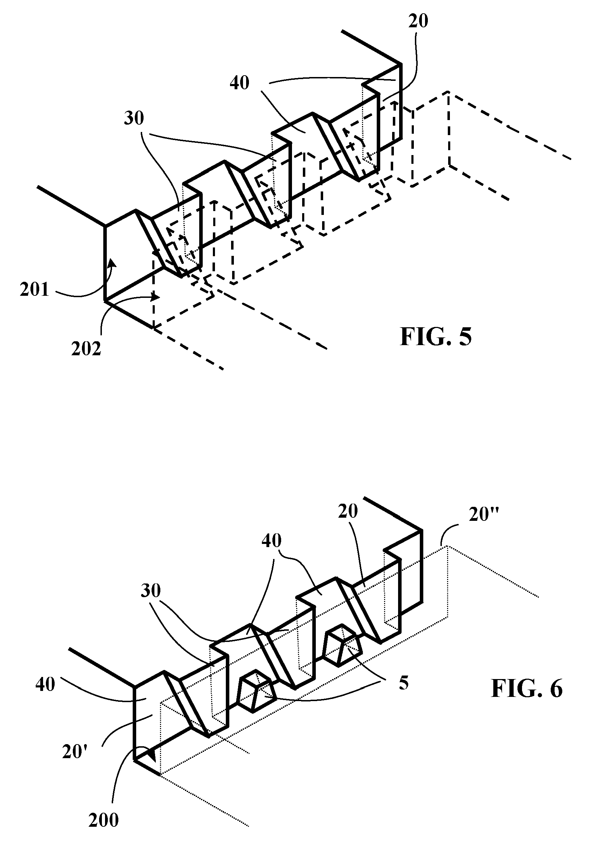

La figure 5 montre une incision 20 selon une quatrième variante de l'invention, cette variante reproduisant, sur chaque paroi 201, 202 délimitant une incision 20, la géométrie non plane d'une paroi de l'incision montrée avec la figure 2. Dans cette quatrième variante, l'incision 20 est formée d'une pluralité de parties larges 40 et de parties étroites 30 et le volume des parties larges est majoritairement situé entre 50% et 100% de la profondeur totale de l'incision. Une autre variante - non représentée ici - pourrait à l'image de ce qui a été fait pour la quatrième variante reprendre la géométrie de la paroi non plane de l'incision montrée avec la figure 2 ou avec la paroi non plane de l'incision montrée avec la figure 4.

La figure 6 représente une incision 20 selon une cinquième variante de l'invention qui est assez proche de l'incision montrée avec la figure 3 et selon laquelle dans certaines des parties larges 40 il est prévu en fond d'incision 200 des plots 5 de protection desdits fonds. Comme représenté dans cette variante, l'incision 20 comprend à ses deux extrémités 20', 20" des parties larges 40 s'ouvrant dans des rainures et il peut ne pas être nécessaire de pourvoir ces parties larges aux extrémités avec des plots en fond de rainure - comme montré sur cette figure, tout corps étranger s'introduisant dans l'une ou l'autre de ces parties larges pouvant migrer vers une rainure latérale et en conséquence ne pas demeurer en place. Bien entendu, la réduction de volume - conséquence de la présence de ces plots 5 - doit être compensée afin de satisfaire à la condition nécessaire sur le volume des parties larges en majorité sous les 50% de la profondeur P de l'incision 20.

Les exemples décrits se réfèrent à des incisions dont les longueurs de chaque partie étroite et large sont sensiblement égales entre elles ; bien entendu, il est du ressort de la personne du métier d'adapter les dimensions des parties étroites et larges selon ce le besoin recherché notamment en terme de performance.

De même, les variantes montrées et décrites dans le présent document peuvent être combinées entre elles sur un même pneu en fonction de l'objectif recherché.

Enfin, l'invention n'est pas limitée aux exemples décrits et représentés et diverses modifications peuvent y être apportées sans sortir du cadre défini par les revendications.

## Revendications

1.  Pneu comprenant une bande de roulement, cette bande de roulement d'épaisseur E, comportant :

    - une surface de roulement (12) destinée à entrer en contact avec le sol,
    - au moins une rangée circonférentielle d'éléments de relief (11), ces éléments de relief (11) étant séparés les uns des autres dans la direction circonférentielle par des incisions (20) d'orientation transversale ou sensiblement transversale,
    - chaque incision (20) d'orientation transversale ou sensiblement transversale s'ouvrant sur la surface de roulement (12) et ayant une profondeur P au plus égale à l'épaisseur E de la bande de roulement, chaque incision (20) formant, sur la surface de roulement du pneumatique à l'état neuf, deux arêtes (21, 22) en vis-à-vis, ces arêtes (21, 22) délimitant au moins une portion étroite (30) de l'incision, c'est-à-dire de largeur moyenne LE inférieure ou égale à 2 mm, et au moins une portion large (40) de l'incision, c'est-à-dire de largeur moyenne LL supérieure à 2 mm, ces portions large et étroite étant disposées en alternance, chaque portion étroite (30) et chaque portion large (40) s'étendant sur toute la profondeur P de l'incision (20), chaque portion large (40) ayant un volume en majorité compris entre la moitié de la profondeur P de la découpure et la profondeur P, ce pneu étant **caractérisé en ce que** la relation suivante est satisfaite:

$$0.90 \times E/R < (\text{somme LE})/Pr < 1.10 \times E/R,$$

    relation dans laquelle :

    - (somme LE) est égale à la l'addition des largeurs moyennes LE des parties étroites de toutes les incisions séparant les éléments de relief d'une même rangée prises sur un cercle centré sur l'axe de rotation du pneu,
    - R le rayon moyen du cercle centré sur l'axe de rotation pris à l'état neuf sur la surface de roulement de la rangée considérée, et Pr étant égal au périmètre moyen du cercle centré sur l'axe de rotation et traversant une série circonférentielle d'incisions,
    - E l'épaisseur moyenne de la bande de roulement prise au niveau de la rangée considérée.

2.  Pneu selon la revendication 1 **caractérisé en ce que** le volume le plus grand de chaque portion large (40) - volume mesuré entre la moitié de la profondeur et le fond de l'incision - est au moins égal à 1.10 fois le volume de ladite portion large (40) située entre la surface de roulement et la moitié de la profondeur de l'incision.

3.  Pneu selon la revendication 2 dans lequel le volume le plus grand de chaque portion large (40) est au moins égal à 1.20 fois le volume le plus petit de la même portion large (40).

4.  Pneu selon l'une des revendications 1 à 3 dans lequel chaque partie large (40) d'incision (20) a une largeur LL constante et une longueur croissante (DL) avec la profondeur, cette longueur (DL) étant mesurée dans la direction de l'incision sur la surface de roulement (12), cette direction correspondant à la direction d'une droite joignant les points d'extrémité de cette incision sur cette surface.

5.  Pneu selon l'une des revendications 1 à 3 dans lequel chaque partie large (40) d'incision (20) a une largeur augmentant régulièrement entre la surface de roulement (12) à l'état neuf et le fond de l'incision (20).

6. Pneu selon l'une des revendications 1 à 3 dans lequel chaque partie large (40) d'incision (20) a une largeur constante entre la surface de roulement (12) à l'état neuf et une profondeur (P1) supérieure à la moitié de la profondeur P de l'incision, cette partie de largeur constante étant prolongée jusqu'à la profondeur P par une partie de largeur supérieure à la largeur de la partie de largeur constante.

7. Pneu selon l'une des revendications 1 à 6 dans lequel au moins certaines portions larges (40) sont pourvues de plots (5) en fond d'incision (20).

**Patentansprüche**

1. Reifen, welcher einen Laufstreifen aufweist, wobei dieser Laufstreifen mit der Dicke E aufweist:

    - eine Lauffläche (12), die dazu bestimmt ist, mit dem Boden in Kontakt zu kommen,
    - wenigstens eine Umfangsreihe von Profilelementen (11), wobei diese Profilelemente (11) in der Umfangsrichtung durch Einschnitte (20) voneinander getrennt sind, die quer oder im Wesentlichen quer ausgerichtet sind,
    - wobei sich jeder quer oder im Wesentlichen quer ausgerichtete Einschnitt (20) an der Lauffläche (12) öffnet und eine Tiefe P aufweist, die höchstens gleich der Dicke E des Laufstreifens ist, wobei jeder Einschnitt (20) auf der Lauffläche des Reifens im Neuzustand zwei einander gegenüberliegende Kanten (21, 22) bildet, wobei diese Kanten (21, 22) wenigstens einen schmalen Abschnitt (30) des Einschnitts, das heißt mit einer mittleren Breite LE, die kleiner oder gleich 2 mm ist, und wenigstens einen breiten Abschnitt (40) des Einschnitts, das heißt mit einer mittleren Breite LL, die größer als 2 mm ist, begrenzen, wobei diese breiten und schmalen Abschnitte abwechselnd angeordnet sind, wobei sich jeder schmale Abschnitt (30) und jeder breite Abschnitt (40) über die gesamte Tiefe P des Einschnitts (20) erstrecken, wobei jeder breite Abschnitt (40) ein Volumen aufweist, das überwiegend zwischen der Hälfte der Tiefe P des Ausschnitts und der Tiefe P enthalten ist,

    wobei dieser Reifen **dadurch gekennzeichnet ist, dass** die folgende Beziehung erfüllt ist:

    $$0{,}90 \; \times \; E/R \; < \; (\text{Summe } LE)/Pr \; < \; 1{,}10 \; \times \; E/R,$$

    wobei in dieser Beziehung:

    - (Summe LE) gleich der Summe der mittleren Breiten LE der schmalen Teile aller Einschnitte ist, welche die Profilelemente ein und derselben Reihe trennen, gemessen auf einem auf der Drehachse des Reifens zentrierten Kreis,
    - R der mittlere Radius des auf der Drehachse zentrierten Kreises ist, gemessen im Neuzustand auf der Lauffläche der betreffenden Reihe, und Pr gleich dem mittleren Umfang des Kreises ist, der auf der Drehachse zentriert ist und eine Umfangsreihe von Einschnitten durchquert,
    - E die mittlere Dicke des Laufstreifens ist, gemessen an der betreffenden Reihe.

2. Reifen nach Anspruch 1, **dadurch gekennzeichnet, dass** das größte Volumen jedes breiten Abschnitts (40) - das zwischen der Hälfte der Tiefe und dem Boden des Einschnitts gemessene Volumen - wenigstens gleich dem 1,10-fachen des Volumens des breiten Abschnitts (40) ist, das sich zwischen der Lauffläche und der Hälfte der Tiefe des Einschnitts befindet.

3. Reifen nach Anspruch 2, wobei das größte Volumen jedes breiten Abschnitts (40) wenigstens gleich dem 1,20-fachen des kleinsten Volumens desselben breiten Abschnitts (40) ist.

4. Reifen nach einem der Ansprüche 1 bis 3, wobei jeder breite Teil (40) eines Einschnitts (20) eine konstante Breite LL und eine mit der Tiefe zunehmende Länge (DL) aufweist, wobei diese Länge (DL) in der Richtung des Einschnitts auf der Lauffläche (12) gemessen wird, wobei diese Richtung der Richtung einer Geraden entspricht, welche die Endpunkte dieses Einschnitts auf dieser Lauffläche verbindet.

5. Reifen nach einem der Ansprüche 1 bis 3, wobei jeder breite Teil (40) eines Einschnitts (20) eine Breite aufweist, die zwischen der Lauffläche (12) im Neuzustand und dem Boden des Einschnitts (20) gleichmäßig zunimmt.

6. Reifen nach einem der Ansprüche 1 bis 3, wobei jeder breite Teil (40) eines Einschnitts (20) eine konstante Breite zwischen der Lauffläche (12) im Neuzustand und einer Tiefe (P1), die größer als die Hälfte der Tiefe P des Einschnitts ist, aufweist, wobei dieser Teil mit konstanter Breite bis zur Tiefe P durch einen Teil mit einer Breite verlängert wird, die größer als die Breite des Teils mit konstanter Breite ist.

7. Reifen nach einem der Ansprüche 1 bis 6, wobei wenigstens bestimmte breite Abschnitte (40) mit Kontaktstücken (5) am Einschnittsboden (20) versehen sind.

## Claims

1. Tyre comprising a tread, this tread of thickness E including:

   - a rolling surface (12) intended to come into contact with the ground,
   - at least one circumferential row of upstanding elements (11), these upstanding elements (11) being separated from one another in the circumferential direction by incisions (20) of transverse or substantially transverse orientation,
   - each incision (20) of transverse or substantially transverse orientation leading onto the rolling surface (12) and having a depth P at most equal to the thickness E of the tread, each incision (20) forming on the rolling surface of the tyre when new two facing edges (21, 22), these edges (21, 22) delimiting at least one narrow portion (30) of the incision, i.e. a portion having a mean width LE less than or equal to 2 mm, and at last one wide portion (40) of the incision, i.e. a portion having a mean width LL greater than 2 mm, these wide and narrow portions being disposed alternately, each narrow portion (30) and each wide portion (40) extending the full depth P of the incision (20), each wide portion (40) having a volume for the most part between half the depth P of the cutout and the depth P,

   this tire being **characterized in that** the following condition is satisfied:

$$0.90 \times E/R < (sum\ LE)/Pr < 1.10 \times E/R,$$

   in which:

   - (sum LE) is the sum of the mean widths LE of the narrow portions of all the incisions separating the upstanding elements of the same row on a circle centred on the rotation axis of the tyre,
   - R is the mean radius of the circle centred on the rotation axis on the rolling surface of the row concerned when new and Pr is the mean perimeter of the circle centred on the rotation axis and passing through a circumferential series of incisions,
   - E is the mean thickness of the tread at the level of the row concerned.

2. Tyre according to Claim 1 **characterized in that** the greatest volume of each wide portion (40) (the volume measured between half the depth and the bottom of the incision) is at least equal to 1.10 times the volume of said wide portion (40) situated between the rolling surface and half the depth of the incision.

3. Tyre according to Claim 2 wherein the greatest volume of each wide portion (40) is at least equal to 1.20 times the smallest volume of the same wide portion (40).

4. Tyre according to any one of Claims 1 to 3 wherein each wide part (40) of an incision (20) has a constant width LL and a length DL increasing with depth, this length DL being measured in the direction of the incision on the rolling surface (12), this direction corresponding to the direction of a straight line segment joining the end points of this incision on this surface.

5. Tyre according to any one of Claims 1 to 3 wherein each wide part (40) of an incision (20) has a width increasing regularly between the rolling surface (12) when new and the bottom of the incision (20).

6. Tyre according to any one of Claims 1 to 3 wherein each wide part (40) of an incision (20) has a constant width between the rolling surface (12) when new and a depth P1 greater than half the depth P of the incision, this part of constant width being extended to the depth P by a part having a width greater than the width of the part of constant width.

7. Tyre according to any one of Claims 1 to 6 wherein at least some wide portions (40) are provided with studs (5) at the bottom of the incision (20).

FIG. 1

FIG.3

**FIG.2**

**FIG. 4**

**FIG. 5**

**FIG. 6**

**EP 2 731 811 B1**

**Documents brevets cités dans la description**

- EP 0847878 A
- EP 1190871 A
- JP 7276923 B